# EUROPÄISCHE PATENTSCHRIFT

(11) **EP 2 387 671 B1**
(45) Veröffentlichungstag und Bekanntmachung des Hinweises auf die Patenterteilung: **25.11.2015**
(21) Anmeldenummer: 09805910.8
(22) Anmeldetag: 17.12.2009
(51) Int. Cl.: F15B 7/08

(54) **GEBERZYLINDER**
MASTER CYLINDER
MAÎTRE-CYLINDRE

(30) Priorität: 15.01.2009 DE 102009004711
(43) Veröffentlichungstag der Anmeldung: 23.11.2011
(73) Patentinhaber: Schaeffler Technologies AG & Co. KG, 91074 Herzogenaurach (DE)
(72) Erfinder: RIBEIRO, Saulo, CEP-18051-450 Sorocaba (BR)
(86) Internationale Anmeldenummer: PCT/DE2009/001783
(87) Internationale Veröffentlichungsnummer: WO 2010/081449

(56) Entgegenhaltungen:
- EP-A1- 0 778 425
- EP-A2- 1 041 292
- WO-A1-96/23684
- GB-A- 1 423 891
- US-A- 3 474 710
- US-A1- 2002 078 688

## Beschreibung

Die Erfindung betrifft einen Geberzylinder, welcher im Wesentlichen aus einem Gehäuse, einem in diesem axial verschiebbar angeordneten, eine Kolbenstange beinhaltenden Kolben, der einen mit einer Hydraulikflüssigkeit gefüllten Druckraum begrenzt und einer Abdeckung für das Gehäuse besteht. Anwendung findet die Erfindung innerhalb hydraulischer Systeme, insbesondere von Kupplungs- oder Bremsbetätigungssystemen, im Automobilbau.

Eine derartige Lösung ist aus der DE 39 10 691 A1 bekannt, wobei die Abdeckung des Gehäuses aus einem den Kolben führenden, branchenüblich auch als Schweißring bezeichneten Bauteil gebildet wird, welches zur axialen Sicherung mittels einer Verschraubung am aus Kunststoff bestehenden Gehäuse befestigt wird.

Die Nachteile dieser Lösung sind darin zu sehen, dass sich die Herstellung der zusammenwirkenden Verbindungselemente am Gehäuse und der Abdeckung fertigungstechnisch aufwändig und zeitintensiv darstellt sowie die Montage am bzw. die Demontage der Abdeckung vom Gehäuse des Geberzylinders umständlich gestaltet und insbesondere dann im Umfeld des Geberzylinders einen entsprechenden Freiraum für den erforderlichen Schraubvorgang bedingt, wenn Funktions- oder Gewährleistungsanalysen am Geberzylinder durchgeführt werden sollen.

Ein Geberzylinder gemäß dem Oberbegriff des Anspruchs 1 ist aus WO96/23684 bekannt,

Aufgabe der Erfindung ist es, eine weitere Ausgestaltung für einen Geberzylinder vorzuschlagen, der einfach aufgebaut ist, dessen Gehäuse und Abdeckung kostengünstig hergestellt sowie unkompliziert montiert und demontiert werden können.

Erfindungsgemäß wird diese Aufgabe mit einem Geberzylinder gemäß Anspruch 1 gelöst.

Die Vorteile der Erfindung bestehen darin, dass ein Geberzylinder zur Verfügung gestellt wird, bei dem die zur Herstellung der Wirkverbindung zwischen Gehäuse und Abdeckung verwendeten Verbindungselemente unkompliziert und kostengünstig hergestellt werden können. Außerdem wird eine schnelle und wenig aufwändige Montage und Demontage der Abdeckung am Gehäuse des Geberzylinders ermöglicht, wobei insbesondere die Demontage auch bei eingeschränkten Platzverhältnissen abgesichert werden kann.

Vorteilhafte Weiterbildungen der Erfindung gehen aus Patentansprüchen 2 bis 3 hervor.

Dabei sichern die Ausgestaltungen der Erfindung, wonach die Stifte als Zylinderstifte bzw. Kegelstifte ausgestaltet sind, dass handelsübliche Normteile Verwendung finden können.

Die Erfindung soll nachfolgend an einem Ausführungsbeispiel und zugehörigen Zeichnungen näher erläutert werden.

Es zeigen:
Figur 1 einen Längsschnitt des Geberzylinders

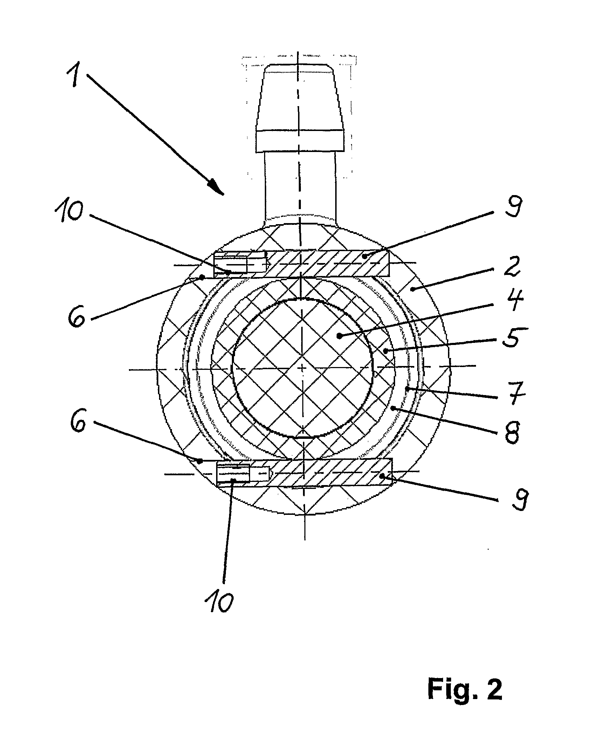

Figur 2 eine Schnittdarstellung des Geberzylinders entlang der Linie A - A der Fig. 1

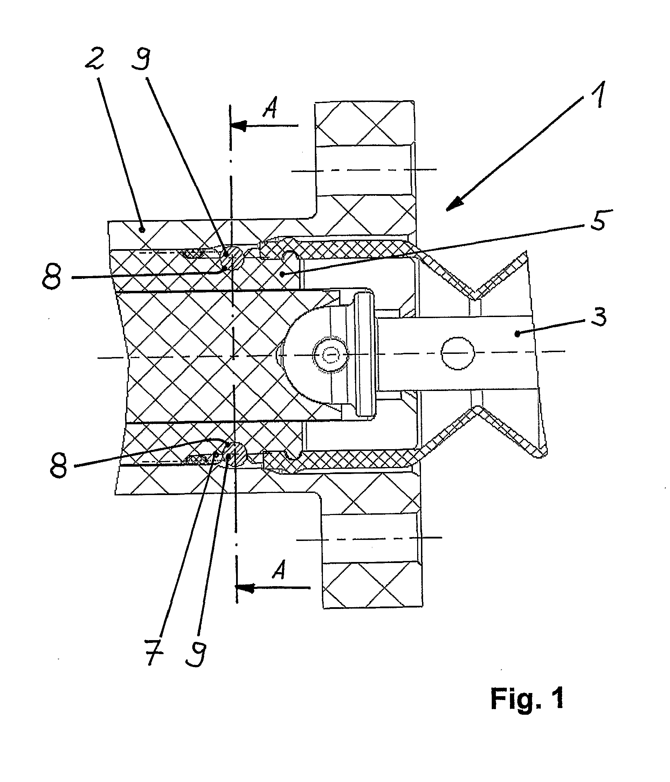

In der Figur 1 ist der Geberzylinder 1, welcher im Wesentlichen aus einem zylindrischen Gehäuse 2, einem in diesem axial verschiebbar angeordneten, eine Kolbenstange 3 beinhaltenden Kolben 4, der einen mit einer Hydraulikflüssigkeit gefüllten Druckraum begrenzt und einer Abdeckung 5 für das Gehäuse 2 besteht, dargestellt.

Zur axialen Sicherung der Abdeckung 5 am Gehäuse 2 ist das Gehäuse 2 mit zwei sich gegenüberliegenden Querbohrungen 6 ausgestattet ist, die jeweils mit einer in der Mantelfläche 7 der Abdeckung 5 vorgesehenen Ausnehmung 8 fluchten, wobei in der jeweiligen Querbohrung 6 und Ausnehmung 8 ein Stift 9 angeordnet ist. Dabei können die Querbohrungen 6 als

Grundbohrungen oder nicht gezeigte Durchgangsbohrungen sowie die Stifte 9 als Zylinderstifte oder nicht dargestellte Kegelstifte ausgebildet sein.

An ihrem der offenen Querbohrung 6 zugewandten Ende beinhalten die Stifte ein Innenge-winde 10, wodurch die Demontage der Stifte 9 vereinfacht wird.

### Bezugszeichenliste

- 1: Geberzylinder
- 2: Gehäuse
- 3: Kolbenstange
- 4: Kolben
- 5: Abdeckung
- 6: Querbohrung
- 7: Mantelfläche
- 8: Ausnehmung
- 9: Stifte
- 10: Innengewinde

## Patentansprüche

1. Geberzylinder (1), welcher im Wesentlichen aus einem Gehäuse (2), einem in diesem axial verschiebbar angeordneten, eine Kolbenstange (3) beinhaltenden Kolben (4), der einen mit einer Hydraulikflüssigkeit gefüllten Druckraum begrenzt und einer Abdeckung (5) für das Gehäuse (2) besteht, wobei das Gehäuse (2) mit zwei sich gegenüberliegenden Querbohrungen (6) ausgestattet ist, die jeweils mit einer in der Mantelfläche (7) der Abdeckung (5) vorgesehenen Ausnehmung (8) fluchten, wobei in der jeweiligen Querbohrung (6) und Ausnehmung (8) ein Stift (9) angeordnet ist, und die Querbohrung (6) als Grundbohrung ausgebildet ist, **dadurch gekennzeichnet, dass** der Stift (9) ein Innengewinde (10) beinhaltet, wobei das Innengewinde (10) an dem der Öffnung der Querbohrung zugewandten Ende des Stifts (9) angeordnet ist.

2. Geberzylinder nach Patentanspruch 1, **dadurch gekennzeichnet, dass** der Stift (9) als Zylinderstift ausgebildet ist.

3. Geberzylinder nach Patentanspruch 1, **dadurch gekennzeichnet, dass** der Stift (9) als Kegelstift ausgestaltet ist.

## Claims

1. Master cylinder (1) which essentially comprises a housing (2), a piston (4), which is arranged in an axially displaceable manner in said housing, contains a piston rod (3) and bounds a hydraulicfluid-filled pressure chamber, and also a covering (5) for the housing (2), wherein the housing (2) is provided with two mutually opposite transverse bores (6), each in alignment with a recess (8) provided in the lateral surface (7) of the covering (5), wherein a pin (9) is arranged in the respective transverse bore (6) and recess (8), and the transverse bore (6) is designed in the form of a blind bore, **characterized in that** the pin (9) contains an internal thread (10), wherein the internal thread (10) is arranged at that end of the pin (9) which is directed towards the opening of the transverse bore.

2. Master cylinder according to Patent Claim 1, **characterized in that** the pin (9) is designed in the form of a cylindrical pin.

3. Master cylinder according to Patent Claim 1, **characterized in that** the pin (9) is configured in the form of a conical pin.

## Revendications

1. Maître-cylindre (1), qui se compose essentiellement d'un boîtier (2), d'un piston (4) contenant une tige de piston (3), disposé de manière déplaçable axialement dans celui-ci, qui limite un espace de pression rempli d'un liquide hydraulique et d'un recouvrement (5) pour le boîtier (2), le boîtier (2) étant muni de deux alésages transversaux opposés (6) qui sont en affleurement à chaque fois avec un évidement (8) prévu dans la surface d'enveloppe (7) du recouvrement (5), une goupille (9) étant disposée dans l'alésage transversal respectif (6) et dans l'évidement (8), et l'alésage transversal (6) étant réalisé sous forme d'alésage de base, **caractérisé en ce que** la goupille (9) contient un filetage intérieur (10), le filetage intérieur (10) étant disposé au niveau de l'extrémité de la goupille (9) tournée vers l'ouverture de l'alésage transversal.

2. Maître-cylindre selon la revendication 1, **caractérisé en ce que** la goupille (9) est réalisée sous forme de goupille cylindrique.

3. Maître-cylindre selon la revendication 1, **caractérisé en ce que** la goupille (9) est réalisée sous forme de goupille conique.
